# EUROPEAN PATENT APPLICATION

(11) **EP 4 254 379 A1**
(43) Date of publication of application: **04.10.2023**
(21) Application number: 21897735.3
(22) Date of filing: 11.11.2021
(51) Int. Cl.: G08G 1/00, G08G 1/09, G08G 1/16, G16Y 10/40, G16Y 40/10, G16Y 40/30

(54) **TRAFFIC CONTROL METHOD, TRAFFIC CONTROL SYSTEM, CONTROL DEVICE, AND PROGRAM**

(30) Priority: 30.11.2020 JP 2020197915
(71) Applicant: Sumitomo Mitsui Construction Co., Ltd., Tokyo 104-0051 (JP)
(72) Inventor: KASUGA Akio, Tokyo 104-0051 (JP); NAKAMORI Junichiro, Tokyo 104-0051 (JP); HAMANAKA Tetsuya, Tokyo 104-0051 (JP)
(74) Representative: MacDougall, Alan John Shaw
(86) International application number: PCT/JP2021/041620
(87) International publication number: WO 2022/113761

(57) **Abstract**

A control unit (100): acquires identification information previously assigned to vehicles (200-1), (200-2), (300-1), and (300-2); acquires vehicle information of the vehicles (200-1) and (200-2) for which the acquired identification information includes first identification information; based on the acquired vehicle information, calculates regulated ranges; and notifies of the calculated regulated ranges.

## Description

### Technical Field

This invention relates to a traffic control method, a traffic control system, a control device, and a program.

### Background of Art

In recent years, travel tests of autonomous vehicles have been conducted in various places. In a system that causes a vehicle to drive automatically, a technology has been considered for recalculating the route and time required based on the actual travel performance of other vehicles for cases in which the actual position of a traveling vehicle deviates beyond an acceptable range from an operation plan that accords with a scheduled arrival date and time or with transit points on a route from a starting point to a destination (see, for example, Patent Document 1.)

### Prior Art Documents

### Patent Documents

Patent Document 1: Patent publication No. 2020-27450

### Summary of the Invention

### Problem to be Solved by the Invention

In techniques such as those described in Patent Document 1, the travel of other vehicles is not considered. As a result, there is a risk that the safety of autonomous vehicles may not be ensured.

The purpose of the present invention is to provide a traffic control method and a traffic control system that can ensure the safety of autonomous vehicles.

### Means for Solving the Problem

The traffic control method of the present invention comprises:
a process for acquiring from autonomous vehicles traveling on roads identification information previously assigned to the autonomous vehicles;
when the acquired identification information includes first identification information, a process for acquiring vehicle information of first autonomous vehicles to which is assigned the identification information that includes the first identification information;
a process for calculating regulated ranges based on acquired vehicle information;
a process for causing first autonomous vehicles to travel according to predetermined operation plans; and
a process for notifying of the calculated regulated ranges.

Further, the traffic control system of the present invention comprises:
autonomous vehicles that travel on roads; and
a control device that controls travel of autonomous vehicles, wherein
the control device comprises:
   an identification information acquisition unit that acquires from the autonomous vehicles identification information previously assigned to the autonomous vehicles;
   a vehicle information acquisition unit that, when identification information acquired by the identification information acquisition unit includes first identification information, acquires vehicle information of a first autonomous vehicle to which is assigned the identification information that includes the first identification information;
   a regulated range calculation unit that calculates regulated ranges based on vehicle information acquired by the vehicle information acquisition unit; and
   a control unit that causes first autonomous vehicles to travel according to a predetermined operation plan and notifies of the regulated ranges calculated by the regulated range calculation unit.

Further, the control device of the present invention comprises:
an identification information acquisition unit that acquires, from the automatic vehicles traveling on roads, identification information previously assigned to the autonomous vehicles;
a vehicle information acquisition unit that, when the identification information acquired by the identification information acquisition unit includes first identification information, acquires vehicle information of the first autonomous vehicle to which is assigned the identification information that includes the first identification information;
a regulated range calculation unit that calculates regulated ranges based on the vehicle information acquired by the vehicle information acquisition unit; and
a control unit that causes a first autonomous vehicle to travel according to a predetermined operation plan and that notifies of the regulated ranges calculated by the regulated range calculation unit.

Further, the program of the present invention causes a computer to execute procedures, the procedures comprising:
a procedure for acquiring, from the autonomous vehicles traveling on roads, identification information previously assigned to the autonomous vehicles;
a procedure for, when the acquired identification information includes first identification information, acquiring the vehicle information of the first autonomous vehicle to which is assigned the identification information that includes the first identification information;
a procedure for calculating regulated ranges based on the acquired vehicle information; and
a procedure for causing a first autonomous vehicle to travel according to a predetermined operation plan and for notifying of the calculated regulated ranges.

### Advantageous Effects of the Invention

In this invention, the safety of autonomous vehicles can be ensured.

### BRIEF DESCRIPTION OF THE DRAWINGS

FIG. 1 is a figure showing a first embodiment of the traffic control system of the present invention.
FIG. 2 is a figure showing an example of the internal configuration of the control device shown in FIG. 1.
FIG. 3 is a figure showing an example of an image of the regulated range calculated by the regulated range calculation unit shown in FIG. 2.
FIG. 4 is a flowchart for explaining an example of the traffic control method in the traffic control system shown in FIG. 1.
FIG. 5 is a figure showing a second embodiment of a traffic control system of the present invention.
FIG. 6 is a figure showing an example of the internal configuration of the control device shown in FIG. 2.
FIG. 7 is a figure showing an example of a parking area with the energy supply unit shown in FIG. 5.
FIG. 8 is a figure showing a third embodiment of the traffic control system of the present invention.
FIG. 9 is a figure showing an example of the internal configuration of the control device shown in FIG. 8.
FIG. 10 is a graph showing an example of a change in the volume of physical distribution versus the time of day.
FIG. 11 is a flowchart for explaining an example of a traffic control method in the traffic control system shown in FIG. 8.
FIG. 12 is a figure showing a fourth embodiment of the traffic control system of the present invention.
FIG. 13 is a figure showing an example of the internal configuration of the control device shown in FIG. 12.
FIG. 14 is a figure showing an example of the vehicles shown in FIG. 12 that are connected together and traveling on an expressway.
FIG.15 is a figure showing an example of an image of the cargo transfer of the vehicles shown in FIG. 12.
FIG. 16 is a flowchart for explaining an example of the traffic control method in the traffic control system shown in FIG. 12.

### Description of the Embodiments

The following is a description of embodiments of the invention with reference to the drawings.

### First Embodiment

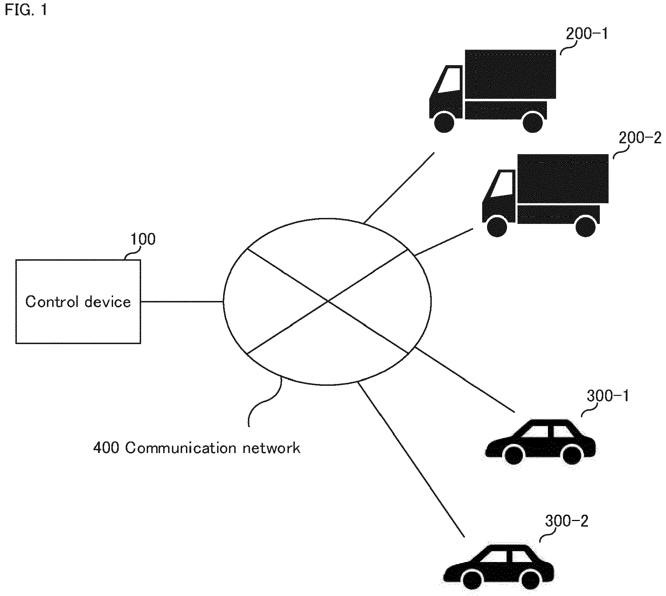

FIG. 1 is a figure showing a first embodiment of the traffic control system of the present invention. As shown in FIG. 1, the traffic control system in this embodiment has control device 100, vehicles 200-1, 200-2, 300-1, and 300-2, and communication network 400. Control device 100 and vehicles 200-1, 200-2, 300-1, and 300-2 are equipped with communication functions. Control device 100 and vehicles 200-1, 200-2, 300-1, and 300-2 are communicatively connected to each other via communication network 400. The form of connection between control device 100 and communication network 400 is not limited. For example, control device 100 and communication network 400 may be connected via radio.

Vehicles 200-1 and 200-2 are first autonomous vehicles capable of automated travel on the road. Each of vehicles 200-1 and 200-2 is pre-assigned with unique identification information that can identify each of vehicles 200-1 and 200-2. Vehicles 200-1 and 200-2 are vehicles that transport cargo. Vehicles 300-1 and 300-2 are second autonomous vehicles capable of automated travel on the road. Each of vehicles 300-1 and 300-2 may be pre-assigned with unique identification information that can identify each of vehicles 300-1 and 300-2. A case is shown in FIG. 1 in which there are two vehicles 200-1 and 200-2 and two vehicles 300-1 and 300-2 as an example, but the number is not limited to these numbers. Vehicles 200-1, 200-2, 300-1, and 300-2 may be autonomous or remotely operated vehicles.

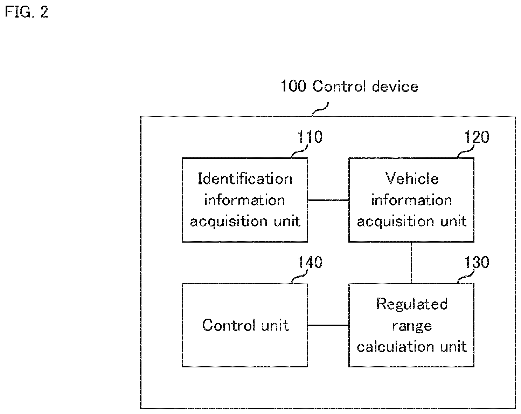

Control device 100 controls the travel of vehicles 200-1, 200-2, 300-1, and 300-2 when they are traveling in automatic operation. Control device 100 may use the automatic operation of vehicles 300-1 and 300-2 and notify vehicles 300-1 and 300-2 of only the regulated ranges without controlling the travel itself, or may also send warning signals to prevent the vehicles from entering the regulated ranges. FIG. 2 shows an example of the internal configuration of control device 100 shown in FIG. 1. As shown in FIG. 2, control device 100 shown in FIG. 1 has identification information acquisition unit 110, vehicle information acquisition unit 120, regulated range calculation unit 130, and control unit 140. Of the components of control device 100 shown in FIG. 1, FIG. 2 shows the main components in this embodiment.

Identification information acquisition unit 110 acquires from each of vehicles 200-1 and 200-2 identification information pre-assigned to each of vehicles 200-1 and 200-2. If identification information is also assigned to each of vehicles 300-1 and 300-2, identification information acquisition unit 110 also acquires identification information from vehicles 300-1 and 300-2. Identification information acquisition unit 110 may send a request signal to each of vehicles 200-1, 200-2, 300-1, and 300-2 requesting identification information. In this case, each of vehicles 200-1, 200-2, 300-1, and 300-2 sends its own identification information to control device 100 (identification information acquisition unit 110) in response to the received request signals. The method of acquiring identification information in identification information acquisition unit 110 is not limited. The timing at which identification information acquisition unit 110 acquires identification information is also not limited. The timing at which identification information acquisition unit 110 acquires identification information may be, for example, predetermined times or times that accord with a predetermined cycle.

The identification information pre-assigned to each of vehicles 200-1, 200-2, 300-1, and 300-2 should be sufficient to distinguish each of vehicles 200-1, 200-2, 300-1, and 300-2 from each other. The identification information includes information that can identify whether the vehicle to which the identification information is assigned is a first or second autonomous vehicle. The identification information assigned to a first autonomous vehicle includes first identification information. The identification information assigned to a second autonomous vehicle includes second identification information. Here, a vehicle to which no identification information is assigned is also considered a second autonomous vehicle. In other words, vehicles other than vehicles whose assigned identification information does not include first identification information (including vehicles for which identification information acquisition unit 110 could not acquire identification information) are second autonomous vehicles. First and second identification information are included at predetermined positions in the identification information. By checking the information contained in that predetermined position, control device 100 can determine whether first or second identification information is included. First and second identification information may be, for example, one bit of information. In this case, first identification information may be indicated when the bit is "0," and second identification information may be indicated when the bit is "1."

When the identification information acquired by identification information acquisition unit 110 includes first identification information, vehicle information acquisition unit 120 acquires vehicle information for each of vehicles 200-1 and 200-2 (first autonomous vehicles) to which identification information including first identification information is assigned. This vehicle information includes at least location information indicating the positions of each of vehicles 200-1 and 200-2. The method of acquiring location information is not limited. For example, vehicle information acquisition unit 120 may use a Global Positioning System (GPS) function installed in vehicles 200-1 and 200-2 to acquire from vehicles 200-1 and 200-2 location information indicating their respective positions. The vehicle information may include information about the cargo carried on vehicles 200-1 and 200-2 and speed information indicating the speed at which vehicles 200-1 and 200-2 are traveling. This cargo information is information indicating, for example, the type and weight of the cargo carried in vehicles 200-1 and 200-2. The traveling speed indicated by the speed information may be calculated based on the position information acquired by vehicle information acquisition unit 120 and the acquired time information.

Regulated range calculation unit 130 calculates regulated ranges based on the location information acquired by vehicle information acquisition unit 120. For example, regulated range calculation unit 130 may calculate the inside of a circle of a predetermined radius centered on the location indicated by the location information acquired by vehicle information acquisition unit 120 as the regulated range. Regulated range calculation unit 130 may calculate the inside of an oval or square as the regulated range according to the location indicated by the location information acquired by vehicle information acquisition unit 120. If vehicle information acquisition unit 120 acquires information indicating the type of cargo carried in vehicles 200-1 and 200-2, regulated range calculation unit 130 may calculate a wider regulated range if the type of cargo is hazardous material or precision equipment. If vehicle information acquisition unit 120 acquires information indicating the weight of the cargo carried in vehicles 200-1 and 200-2, regulated range calculation unit 130 may calculate a regulated range that increases in size with heavier cargo. If vehicle information acquisition unit 120 acquires speed information of vehicles 200-1 and 200-2, regulated range calculation unit 130 may calculate a regulated range that increases in size with faster traveling speeds indicated by the speed information. For example, regulated range calculation unit 130 may calculate the braking distance of vehicles 200-1 and 200-2 based on the weight of the cargo acquired by vehicle information acquisition unit 120 and the traveling speeds of vehicles 200-1 and 200-2. Based on the calculated braking distance, the regulated range may be calculated as a distance such that vehicles 200-1 and 200-2 will not collide if vehicles 200-1 and 200-2 make a sudden stop. This regulated range is a range that prevents a second autonomous vehicle from entering the area.

Control unit 140 causes vehicles 200-1 and 200-2 to travel according to predetermined operation plans. Control unit 140 notifies the regulated range calculated by regulated range calculation unit 130. The destination of this notification is second autonomous vehicles (vehicles 300-1 and 300-2). The purpose of the regulated range notification is to prevent second autonomous vehicles from entering the regulated ranges. Therefore, when notifying the regulated range, control unit 140 may notify second autonomous vehicles of information to control the operation plans of second autonomous vehicles such that the second autonomous vehicles do not enter the regulated ranges. If control unit 140 also controls the automatic operations of vehicles 300-1 and 300-2, control unit 140 excludes the regulated ranges from the range within which vehicles 300-1 and 300-2 can travel. Control unit 140 may send a warning signal to vehicles 300-1 and 300-2 to prevent them from entering the regulated ranges. Control unit 140 may notify vehicles 200-1 and 200-2 of the regulated ranges, and vehicles 200-1 and 200-2 may also notify vehicles 300-1 and 300-2 of the regulated ranges. At this time, vehicles 200-1 and 200-2 may send warning signals to vehicles 300-1 and 300-2 to prevent them from entering the regulated ranges. These warning signals should be recognizable by vehicles 300-1 and 300-2. The warning signals may be transmitted using, for example, ultrasound.

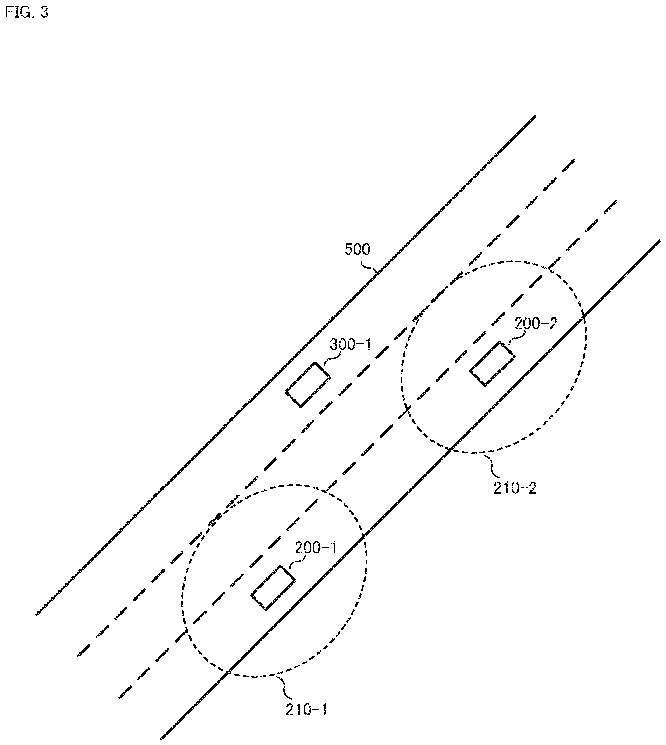

FIG. 3 is a figure showing an example of an image of the regulated ranges calculated by regulated range calculation unit 130 shown in FIG. 2. As shown in FIG. 3, vehicles 200-1, 200-2, and 300-1 are traveling on expressway 500. Regulated range calculation unit 130 calculates regulated ranges 210-1 and 210-2 for vehicles 200-1 and 200-2, respectively. Control unit 140 controls vehicle 300-1 such that it does not enter these regulated ranges 210-1 and 210-2. The method of preventing vehicle 300-1 from entering regulated ranges 210-1 and 210-2 is described above. Control unit 140 may also control vehicles 200-1 and 200-2 to travel only in a predetermined lane of expressway 500 and use that lane as the regulated range. When control unit 140 detects that vehicle 200-2 has reached a predetermined distance from vehicle 200-1 that is traveling ahead of vehicle 200-1, it may control vehicle 200-2 to follow vehicle 200-1. At this time, control unit 140 may control vehicle 200-2 to perform an automatic operation that prioritizes following vehicle 200-1. Here, control unit 140 may change the predetermined distance for detecting the approach of a vehicle depending on the deterioration of the road. For example, control unit 140 may acquire information indicating the deterioration status of the road from an external source and then increase the predetermined distance as the deterioration status indicated by the acquired information worsens (as the degree of deterioration increases.) The information indicating the deterioration status may be, for example, a value acquired from periodic inspections of the road. The information indicating the deterioration status can be, for example, the value of the degree of deterioration of the road itself or a classified value of the degree of deterioration. The information indicating the deterioration status may be, for example, a value based on the number of years since the road was first used or renovated (the value increasing as the number of years increases). In this way, the distance for detecting approach is controlled according to the deterioration of the road. This function reduces the load on the road. For example, when vehicle 200-2 enters the regulated range of vehicle 200-1 or when vehicle 200-1 enters the regulated range of vehicle 200-2, control unit 140 may detect that vehicle 200-2 has reached a predetermined distance from vehicle 200-1 that is traveling ahead. In other words, when the regulated range of vehicle 200-1 that is traveling ahead and the regulated range of vehicle 200-2 traveling behind overlap each other, control unit 140 can detect that vehicle 200-2 has approached to a predetermined distance from vehicle 200-1. The size (distance) of this regulated range may also be varied according to the deterioration of the road as described above. For example, the greater the degree of the state of road deterioration, the larger (greater) the regulated range may be. Such control of the vehicle that is behind regarding following the vehicle that is ahead may be performed using a change of operation mode (e.g., switching control between a normal operation mode and a following operation mode). This type of following travel control reduces the load on the vehicle behind for controlling travel according to the environment ahead. For example, if the vehicle ahead is traveling without problems, it can be determined that there are no obstacles (e.g., obstacles in the way on the road surface, etc.) to traveling. This reduces the control load by lowering the control management level of the vehicle traveling behind.

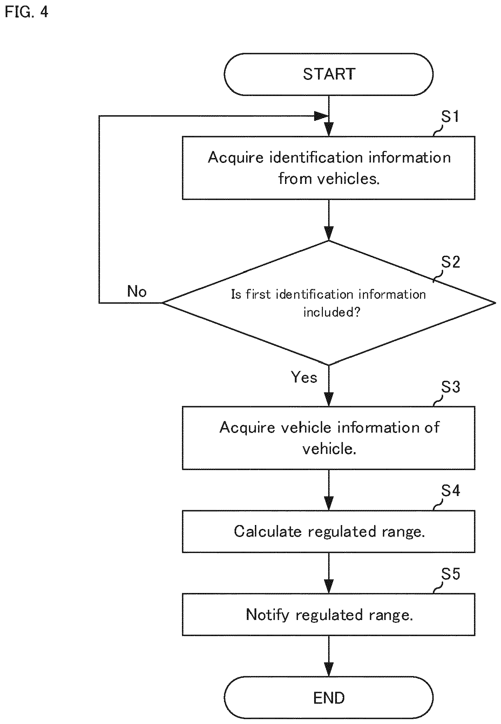

A traffic control method in the traffic control system shown in FIG. 1 is described below. FIG. 4 is a flowchart for explaining an example of a traffic control method in the traffic control system shown in FIG. 1. This section describes the process in control device 100 shown in FIG. 1. An example is taken in which vehicles 200-1, 200-2, 300-1, and 300-2 are traveling on an expressway under automatic operation.

First, identification information acquisition unit 110 acquires identification information previously assigned to each of vehicles 200-1, 200-2, 300-1, and 300-2 that are traveling on the expressway (Step S1). Here, if vehicles 300-1 and 300-2 are second autonomous vehicles to which no identification information has been assigned as described above, identification information acquisition unit 110 cannot acquire identification information from vehicles 300-1 and 300-2. The process is therefore terminated. Vehicle information acquisition unit 120 then determines whether first identification information is included in the identification information acquired by identification information acquisition unit 110 (Step S2). If first identification information is included in the identification information acquired by identification information acquisition unit 110, vehicle information acquisition unit 120 acquires the vehicle information of the vehicles to which the identification information is assigned (Step S3). In this case, first identification information is included in the identification information assigned to each of two vehicles 200-1 and 200-2. Therefore, vehicle information acquisition unit 120 acquires vehicle information for each of vehicles 200-1 and 200-2. Regulated range calculation unit 130 then calculates the respective regulated ranges based on the vehicle information for each of vehicles 200-1 and 200-2 acquired by vehicle information acquisition unit 120 (Step S4). Control unit 140 then notifies users of the regulated ranges calculated by regulated range calculation unit 130 (Step S5).

In a closed system such as an expressway, it is difficult to achieve stable automatic operation of vehicles traveling on the expressway without a uniform platform, such as a railroad operating system. Therefore, in this embodiment, the regulated ranges are calculated based on the vehicle information of autonomous vehicles including specific identification information acquired from the vehicles, and the calculated regulated ranges are then notified. In this way, in a closed system, the travel of autonomous vehicles having the highest priority are secured first, and autonomous vehicles having lower priority are then caused to travel such that they do not interfere with the travel of autonomous vehicles having higher priority. This ensures that other vehicles do not interfere with the travel of vehicles according to a predetermined specific vehicle operation plan. Other vehicles may travel freely outside the regulated ranges. This helps to ensure the safety of certain autonomous vehicles.

### Second Embodiment

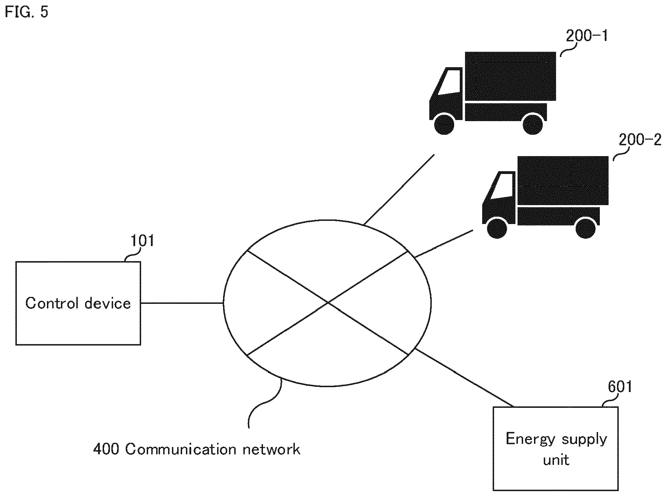

FIG. 5 is a figure showing a second embodiment of a traffic control system of the present invention. As shown in FIG. 5, the traffic control system in this embodiment has control device 101, vehicles 200-1 and 200-2, communication network 400, and energy supply unit 601. Each of vehicles 200-1 and 200-2 and communication network 400 are the same as vehicles 200-1 and 200-2 and communication network 400, respectively, in the first embodiment.

Energy supply unit 601 is installed at a predetermined point. The predetermined point is, for example, a service area (SA) or parking area (PA) along an expressway, a road station on a general road, or any other area where vehicles 200-1 and 200-2 can stop. Energy supply unit 601 supplies the energy required for vehicles 200-1 and 200-2 to travel. If vehicles 200-1 and 200-2 are electric vehicles (EVs), energy supply unit 601 charges vehicles 200-1 and 200-2 (contactless power supply also being possible). If vehicles 200-1 and 200-2 are gasoline-powered vehicles, energy supply unit 601 supplies gasoline to vehicles 200-1 and 200-2. If vehicles 200-1 and 200-2 are powered by hydrogen energy, energy supply unit 601 supplies hydrogen to vehicles 200-1 and 200-2. Energy supply unit 601 is not limited to these forms and supplies energy according to vehicles 200-1 and 200-2. Energy supply unit 601 may be linked to a photovoltaic facility to charge vehicles 200-1 and 200-2 using electrical energy generated by sunlight. Energy supply unit 601 may also operate as a storage battery by charging the electrical energy acquired in conjunction with a photovoltaic facility. When energy supply unit 601 operates as a storage battery, the object of charging may include not only vehicles 200-1 and 200-2 but also other electrical equipment and electrical facilities.

Control device 101 controls the travel of vehicles 200-1 and 200-2. Control device 101 may control the supply of energy to vehicles 200-1 and 200-2 from energy supply unit 601. Control device 101 is equipped with a communication function. There is no particular limitation on the form of connection between control device 101 and communication network 400. For example, control device 101 and communication network 400 may be connected via radio.

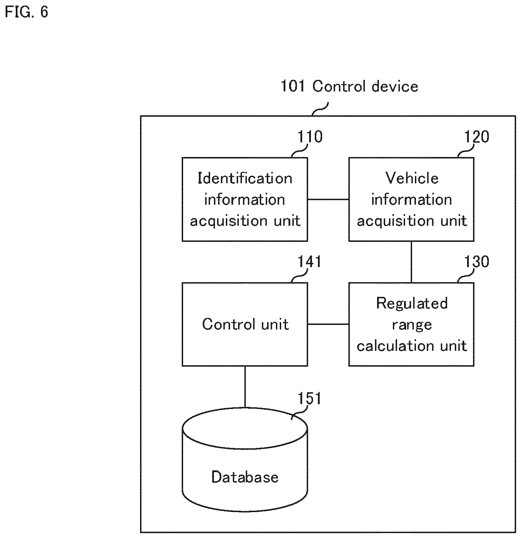

FIG. 6 is a figure showing an example of the internal configuration of control device 101 shown in FIG. 2. As shown in FIG. 6, control device 101 shown in FIG. 5 has identification information acquisition unit 110, vehicle information acquisition unit 120, regulated range calculation unit 130, control unit 141, and database 151. Of the components of control device 101 shown in FIG. 5, FIG. 6 shows the main components in this embodiment. Identification information acquisition unit 110, vehicle information acquisition unit 120, and regulated range calculation unit 130 are the same as identification information acquisition unit 110, vehicle information acquisition unit 120, and regulated range calculation unit 130, respectively, in the first embodiment.

Database 151 stores in advance the location of energy supply unit 601 and the types of energy that can be supplied. Database 151 may also store the amount of energy that can be supplied by energy supply unit 601. Database 151 may store in advance the types of energy that can power each of vehicles 200-1 and 200-2.

In addition to the functions provided by control unit 140 in the first embodiment, control unit 141 controls the supply of energy to vehicles 200-1 and 200-2 from energy supply unit 601. Control unit 141 monitors the amount of energy remaining in vehicles 200-1 and 200-2, and when the amount of energy remaining falls below a preset threshold, vehicle 200-1 and 200-2 may be controlled to travel to the location of energy supply unit 601 to control the supply of necessary energy from energy supply unit 601. At this time, control unit 141 stops vehicles 200-1 and 200-2 for the supply time corresponding to the energy that is to be supplied to vehicles 200-1 and 200-2 by energy supply unit 601.

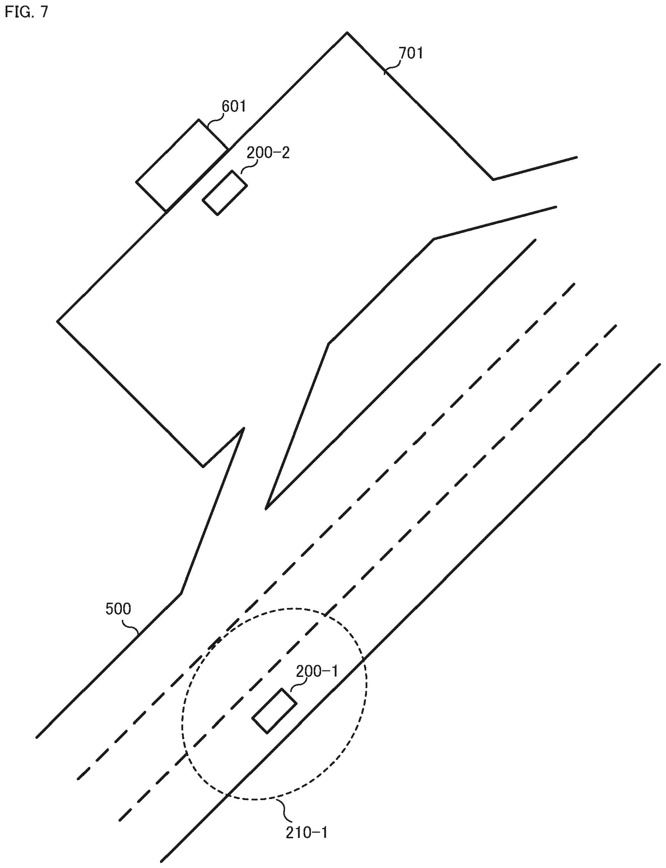

FIG. 7 is a figure showing an example of a parking area with energy supply unit 601 shown in FIG. 5. As shown in FIG. 7, energy supply unit 601 is located in parking area 701 on expressway 500. Vehicle 200-2 is stopped at the location of this energy supply unit 601, and control unit 141 controls energy supply unit 601 to supply energy to vehicle 200-2.

Thus, energy supply unit 601 is provided at a predetermined point on the road where vehicles 200-1 and 200-2 travel to supply energy to vehicles 200-1 and 200-2. For example, by installing energy supply unit 601 at service areas and parking areas on expressways and road stations on general roads, it is possible to make effective use of these facilities.

### Third Embodiment

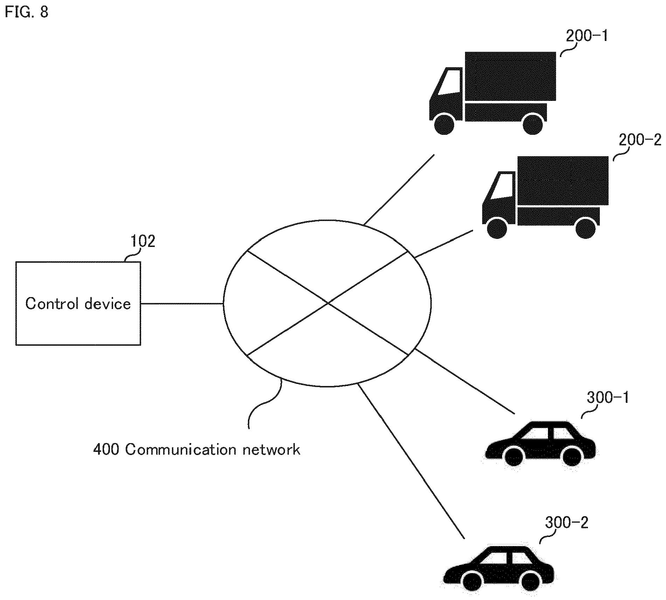

FIG. 8 is a figure showing a third embodiment of a traffic control system of the present invention. As shown in FIG. 8, the traffic control system in this embodiment has control device 102, vehicles 200-1, 200-2, 300-1, and 300-2, and communication network 400. Vehicles 200-1, 200-2, 300-1, and 300-2, and communication network 400 are the same as vehicles 200-1, 200 -2, 300-1, and 300-2, and communication network 400, respectively, in the first embodiment.

Control device 102 controls the travel of vehicles 200-1, 200-2, 300-1, and 300-2. Control device 102 is equipped with a communication function. There are no restrictions on the type of connection between control device 102 and communication network 400. For example, control device 102 and communication network 400 may be connected via radio.

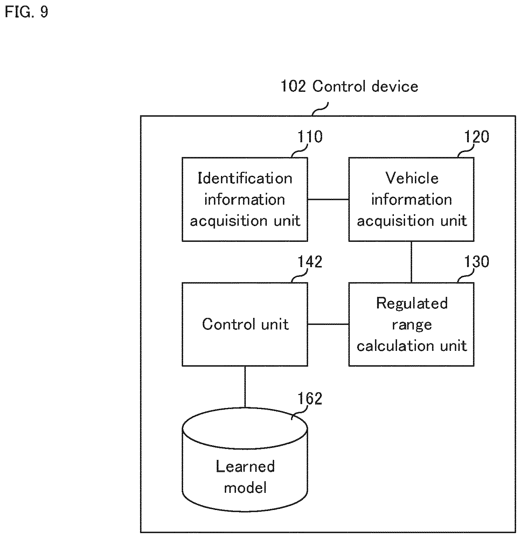

FIG. 9 is a figure showing an example of the internal configuration of control device 102 shown in FIG. 8. As shown in FIG. 9, control device 102 shown in FIG. 8 has identification information acquisition unit 110, vehicle information acquisition unit 120, regulated range calculation unit 130, control unit 142, and learned model 162. Of the components of control device 102 shown in FIG. 8, FIG. 9 shows the main components in this embodiment. Identification information acquisition unit 110, vehicle information acquisition unit 120, and regulated range calculation unit 130 are each the same as identification information acquisition unit 110, vehicle information acquisition unit 120, and regulated range calculation unit 130, respectively, in the first embodiment.

Learned model 162 is a machine-learned model that uses historical data to map operation plans to environments. Learned model 162 is, for example, the result of machine learning in a learning phase in which an ambient environment such as time of year, season, day of the week, time of day, weather (weather, temperature, etc.), and region are input along with the volume of physical distribution, transport section, transport distance, etc. in each environment, whereby operation plans can be output according to the environment in the inference phase.

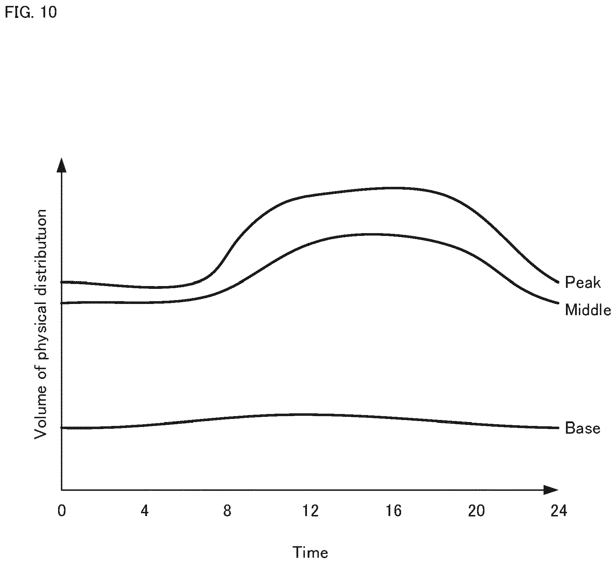

FIG. 10 is a graph showing an example of change in the volume of physical distribution versus the time of day. As shown in FIG. 10, the volume of physical distribution varies with the time of day. In the example shown in FIG. 10, the volume of physical distribution is divided into three levels. The base data is the policy-defined volume of physical distribution. Base data is, for example, the volume of physical distribution of goods transported to each region that are to be secured (replenished) in advance for stockpiling in the event of a disaster or to prevent depletion of stock (insufficient stock) in stores and distribution centers. In other words, vehicles 200-1 and 200-2 transport at least a pre-determined amount of cargo. Middle data are data for the volume of physical distribution acquired using learned model 162. Peak data is physical distribution calculated on a case-by-case basis according to the supply and demand at a particular time. The graph may show changes in the volume of physical distribution with respect to, for example, the day of the week, day, month, or season on the horizontal axis, as described above.

In addition to the functions provided by control unit 140 in the first embodiment, control unit 142 controls the travel of vehicles 200-1 and 200-2 according to the environment. Specifically, control unit 142 inputs to learned model 162 the environment in which vehicles 200-1 and 200-2 travel, and controls the travel of vehicles 200-1 and 200-2 according to the operation plan output from learned model 162. The environment indicated by the environmental information that is input to learned model 162 by control unit 142 is the ambient environment described above.

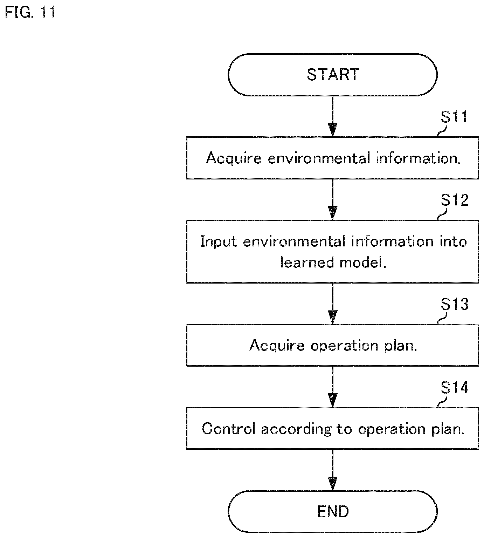

A traffic control method in the traffic control system shown in FIG. 8 is described below. FIG. 11 is a flowchart for explaining an example of a traffic control method in the traffic control system shown in FIG. 8. This section describes the process in control device 102 shown in FIG. 8.

First, control unit 142 acquires environmental information (Step S11). Here, control unit 142 acquires, for example, the season, date, time (day of the week), and time of day from a calendar or clock, acquires information about the weather from a site that provides weather information, acquires information from the vendor that owns vehicles 200-1 and 200-2 regarding the volume of physical distribution and information indicating the section to be transported. Control unit 142 then inputs the acquired environmental information into learned model 162 (Step S12). Control unit 142 acquires from learned model 162 the operation plans that learned model 162 has learned by machine learning using the environmental information (Step S13). Control unit 142 then controls the travel of vehicles 200-1 and 200-2 according to the acquired operation plans (Step S14).

Thus, using learned model 162, in which operation plans are learned by machine learning using environmental information, operation plans are acquired according to the environment in which vehicles 200-1 and 200-2 travel, and the system controls the travel of vehicles 200-1 and 200-2 according to the acquired operation plans. This allows for efficient travel control based on the environment in which a particular autonomous vehicle is traveling.

### Fourth Embodiment

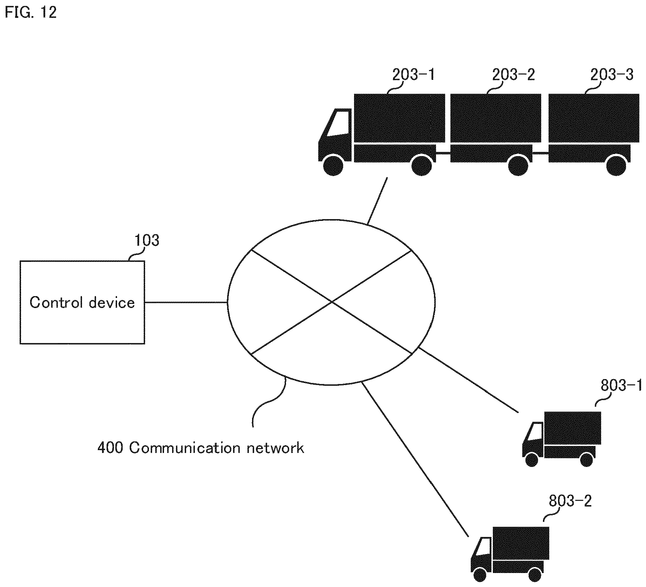

FIG. 12 is a figure showing a fourth embodiment of a traffic control system of the present invention. As shown in FIG. 12, the traffic control system in this embodiment has control device 103, vehicles 203-1, 203-2, 203-3, 803-1, and 803-2, and communication network 400. Communication network 400 is the same as communication network 400 in the first embodiment. Control device 103 and vehicles 203-1, 203-2, 203-3, 803-1, and 803-2 are equipped with communication functions. Control device 103 and vehicles 203-1, 203-2, 203-3, 803-1, and 803-2 are communicatively connected to each other via communication network 400. There is no particular limitation on the form of connection between control device 103 and communication network 400. For example, control device 103 and communication network 400 may be connected via radio.

Vehicles 203-1, 203-2, and 203-3 are first autonomous vehicles capable of traveling on a road. Vehicles 203-1, 203-2, and 203-3 each have unique Identification information that is assigned in advance. This identification information includes first identification information described above. Vehicles 203-1, 203-2, and 203-3 are vehicles that transport cargo. Vehicles 203-1, 203-2, and 203-3 are each connected to each other. In the example shown in FIG. 12, vehicle 203-1 is in the lead, vehicle 203-2 is connected behind vehicle 203-1, and vehicle 203-3 is connected behind vehicle 203-2. There is no limitation on the order of connection or the number of vehicles that are connected. This connection can be a mechanical connection. Alternatively, this connection can also be an electrical connection. An electrical connection also includes the control of a rear vehicle that follows the front vehicle, as described in the first embodiment.

Vehicles 803-1 and 803-2 are third autonomous vehicles capable of traveling on the road. Each of vehicles 803-1 and 803-2 is pre-assigned unique identification information that can identify each of vehicles 803-1 and 803-2. This identification information includes third identification information. Vehicles 803-1 and 803-2 are vehicles that transport cargo. The maximum loading capacity of each of vehicles 803-1 and 803-2 is less than the maximum loading capacity of each of vehicles 203-1, 203-2, and 203-3. The main travel routes for each of vehicles 803-1 and 803-2 are not primarily expressways as for vehicles 203-1, 203-2, and 203-3, but rather, routes to delivery destinations or regional distribution centers for individual cargoes.

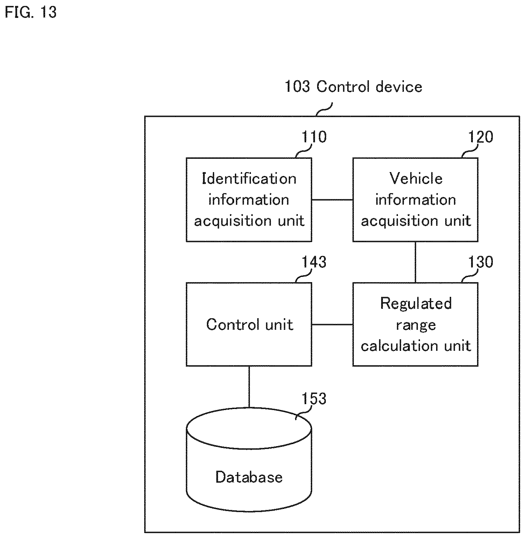

FIG. 13 is a figure showing an example of the internal configuration of control device 103 shown in FIG. 12. As shown in FIG. 13, control device 103 shown in FIG. 12 has identification information acquisition unit 110, vehicle information acquisition unit 120, regulated range calculation unit 130, control unit 143, and database 153. Of the components of control device 103 shown in FIG. 12, FIG. 13 shows the main components in this embodiment. Identification information acquisition unit 110, vehicle information acquisition unit 120, and regulated range calculation unit 130 are each the same as identification information acquisition unit 110, vehicle information acquisition unit 120, and regulated range calculation unit 130, respectively, in the first embodiment.

Database 153 stores the maximum loading capacity of each of vehicles 203-1, 203-2, 203-3, 803-1, and 803-2, and database 153 stores the amount of cargo on each of vehicles 203-1, 203-2, 203-3, 803-1, and 803-2.

In addition to the functions provided by control unit 140 in the first embodiment, control unit 143 calculates the distribution of cargo to be transferred from vehicles 203-1, 203-2, and 203-3 to vehicles 803-1 and 803-2 based on the amount of cargo on each of the vehicles 203-1, 203-2, and 203-3 and the maximum loading capacity of vehicles 803-1 and 803-2. Control unit 143 reads the amount of cargo carried in each of vehicles 203-1, 203-2, and 203-3 and the maximum loading capacity of vehicles 803-1 and 803-2 from database 153. Control unit 143 calculates the distribution of cargo to be transferred from vehicles 203-1, 203-2, and 203-3 to vehicles 803-1 and 803-2 based on the readout of the amount of cargo volume and the maximum loading capacity. At this time, control unit 143 preferably calculates the distribution by considering the delivery destination of each item of cargo. In this case, the delivery destination of the cargo may be determined by control unit 143 based on the destination information electronically written on, for example, a tag attached to each item of cargo. Alternatively, the destination information on the tags attached to each item cargo may be acquired by an imaging means such as a camera provided in advance, the acquired images may be analyzed by control unit 143 to recognize the destination information, and control unit 143 may then determine the delivery destination based on the recognized destination information. When control unit 143 calculates the distribution, control unit 143 stops vehicles 203-1, 203-2, 203-3, 803-1, and 803-2 that are subject to the cargo transfer at the specified transfer position. When using a robot or other equipment dedicated for the loading and unloading of cargo, control unit 143 may control the operation of the robot during the loading and unloading of cargo. Control unit 143 may also present transfer information indicating the calculated distribution. This presentation may be made by control unit 143 transmitting the transfer information to vehicles 203-1, 203-2, 203-3, 803-1, and 803-2, and vehicles 203-1, 203-2, 203-3, 803-1, and 803-2 that have received the transfer information then displaying the information. Control unit 143 may also transmit the transfer information to an information processing device belonging to the operator who performs the transfer, and the information processing device that has received the transfer information may then output a display, audio output, or other output.

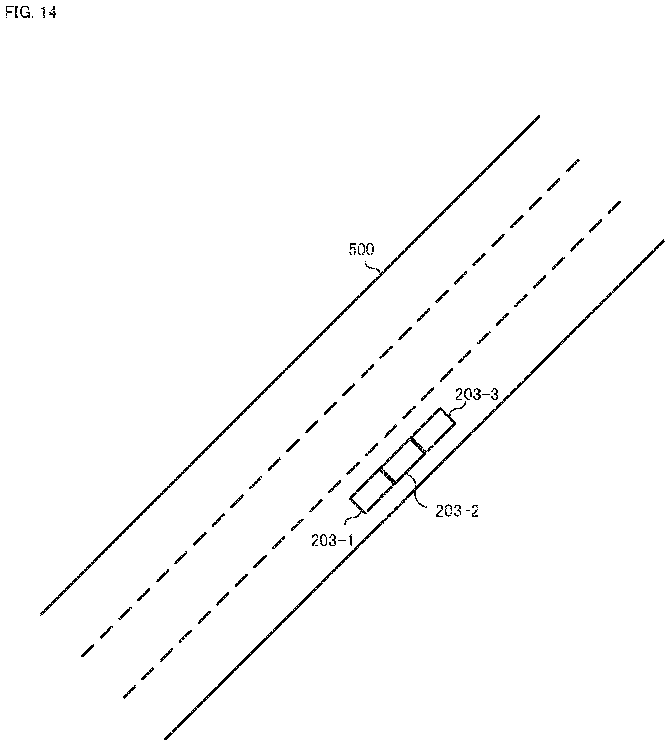

FIG. 14 is a figure showing an example of vehicles 203-1, 203-2, and 203-3 shown in FIG. 12 connected together and traveling on expressway 500. As shown in FIG. 14, the vehicles are traveling on expressway 500 connected together with vehicle 203-1 as the first vehicle, vehicle 203-2 as the second, and vehicle 203-3 as the last vehicle. The vehicles thus connected travel from a predetermined location where vehicles can stop (e.g., parking area 701 shown in FIG. 7) to a predetermined location where the vehicles can next stop. Control unit 143 may control the connection or separation process at parking area 701. In this case, control unit 143 controls the connection and separation of vehicles 203-1, 203-2, and 203-3 based on the operation plan and the amount of cargo to be transported.

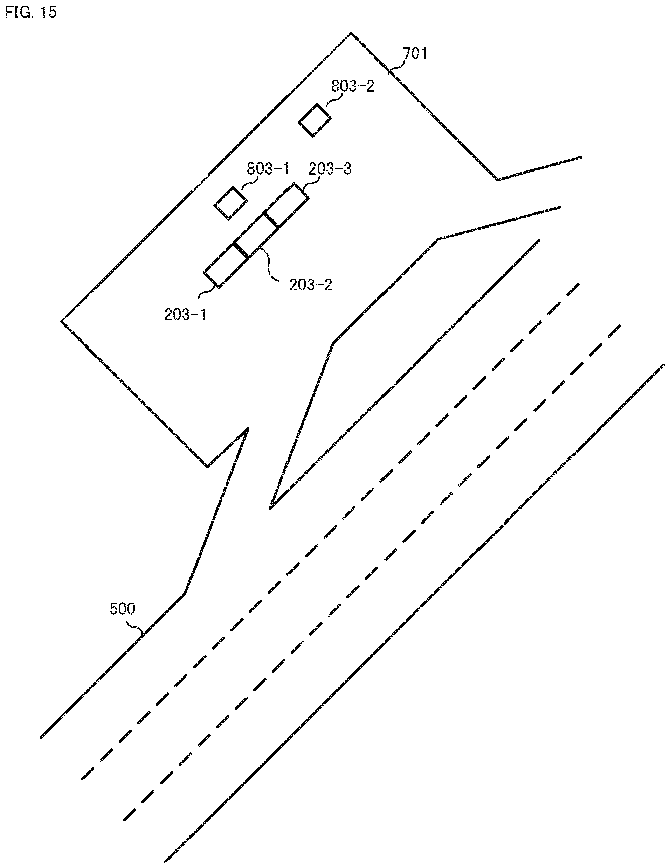

FIG.15 is a figure showing an example of an image of the cargo transfer of vehicles 203-1, 203-2, 203-3, 803-1, and 803-2 shown in FIG. 12. As shown in FIG. 15, vehicles in which vehicles 203-1, 203-2, and 203-3 are connected to each other and vehicles 803-1 and 803 -2 are parked in parking area 701 on expressway 500. In addition, in order to transfer the cargo on board the vehicles in which vehicles 203-1, 203-2, and 203-3 are connected together to vehicle 803-1, vehicle 803-1 is parked next to the vehicles in which vehicles 203-1, 203-2, and 203-3 are connected to each other. Control unit 143 controls the vehicles in which vehicles 203-1, 203-2, and 203-3 are connected to each other and vehicle 803-1 to stop so that they are in this a positional relationship.

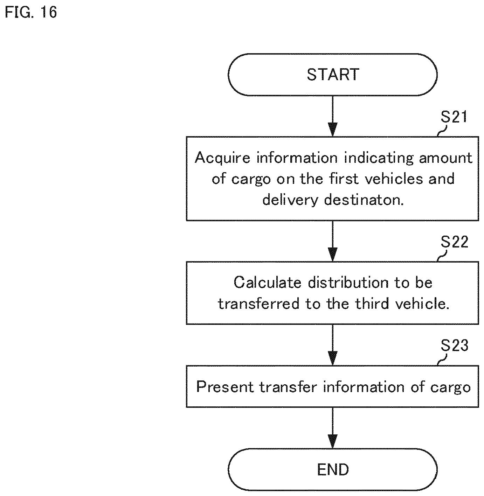

A traffic control method in the traffic control system shown in FIG. 12 is described below. FIG. 16 is a flowchart for explaining an example of a traffic control method in the traffic control system shown in FIG. 12. This section describes the process in control device 103 shown in FIG. 12.

First, control unit 143 acquires information indicating the amount of cargo on vehicles 203-1, 203-2, and 203-3, the maximum loading capacity of vehicles 803-1 and 803-2, and the cargo delivery destinations (Step S21). The method by which control unit 143 acquires this information is described above. Control unit 143 then calculates the distribution of cargo to be transferred to vehicles 803-1 and 803-2 based on the information acquired in Step S21 (Step S22). When control unit 143 calculates the distribution of the transfer, control unit 143 presents the calculated distribution as transfer information (Step S23). Control unit 143 may also control the transfer of cargo on vehicles 803-1 and 803-2 to vehicles 203-1, 203-2 and 203-3. In this case, similar to the process described above, control unit 143 controls the transfer of cargo based on the amount of cargo on vehicles 803-1 and 803-2, the maximum loading capacity of vehicles 203-1, 203-2, and 203-3, and the delivery destination of the cargo.

In this way, multiple vehicles can be caused to travel connected together. This allows for the simultaneous transport of a large amount of cargo. In areas where vehicles can stop, such as expressway parking areas, cargo is transferred from multiple connected vehicles to smaller vehicles having a smaller maximum load capacity for transport to the delivery destinations. This allows for the effective use of such areas that allow stopping.

The operation plan for first autonomous vehicles such as vehicles 200-1, 200-2, and 200-3 traveling on a ring road does not have to be precise. In other words, by having multiple first autonomous vehicles traveling on a ring road, there is no problem even if the arrival (operation) time of the vehicles at each location (e.g., parking areas, etc.) on the ring road is not very accurate. Distribution centers and operation management facilities may also be located at parking areas and other locations. Vehicles 200-1 and 200-2 can also be very large vehicles that straddle vehicles. A fixed number of vehicles may also be disposed at parking areas or other locations where vehicles are parked. For example, a multilevel parking lot may be established in a parking area, etc., and multiple vehicles may be waiting in the multilevel parking lot.

In this invention, dedicated freight vehicles can travel connected together on expressways just as trains travel on railroads while the travel of other vehicles is regulated, and areas where vehicles can stop such as service areas and parking areas can be used as spaces for supplying energy and reloading cargo. This scheme will provide a new and effective way to use expressways when a system is established in which general-purpose vehicles do not use the expressways.

Although described above by allocating each function (process) to a respective component, these assignments are not limited to those described above. In addition, the configurations of the components in the above-described embodiments are merely examples, and the present invention is not limited thereto.

The processing performed by each of the above-described components may be performed by logic circuits manufactured according to the purpose. Further, a computer program (hereinafter, referred to as a "program") in which the processing contents are described as procedures may be recorded on a recording medium that can be read by devices (e.g., control devices 100 to 103, hereinafter referred to as "control devices") equipped in each component, and the programs recorded on the recording medium may be read into and executed by the control devices. The recording medium that can be read by the control devices refers to an HDD (Hard Disc Drive) or a memory such as a ROM (Read Only Memory), a RAM (Random Access Memory), or the like incorporated in the control devices or to a transferable recording medium such as a magneto-optical disk, a DVD (Digital Versatile Disc), a CD (Compact Disc), a Blu-ray (registered trademark) Disc, and a USB (Universal Serial Bus) memory. The program recorded on the recording medium is read by a CPU provided in each of the control devices, and the same processing as that described above is performed under the control of the CPU. Here, the CPU operates as a computer that executes a program read from a recording medium on which a program is recorded.

Some or all of the above embodiments may also be described as, but not limited to, the following appendices:
**Appendix 1:** A traffic control system, comprising:
   autonomous vehicles that travel on roads; and
   a control device that controls travel of autonomous vehicles, wherein
   the control device comprises:
      an identification information acquisition unit that acquires from the autonomous vehicles identification information previously assigned to the autonomous vehicles;
      a vehicle information acquisition unit that, when identification information acquired by the identification information acquisition unit includes first identification information, acquires vehicle information of a first autonomous vehicle to which is assigned the identification information that includes the first identification information;
      a regulated range calculation unit that calculates regulated ranges based on vehicle information acquired by the vehicle information acquisition unit; and
      a control unit that causes first autonomous vehicles to travel according to a predetermined operation plan and notifies of the regulated ranges calculated by the regulated range calculation unit.
**Appendix 2:** The traffic control system according to Appendix 1, wherein the vehicle information acquisition unit acquires, as the vehicle information, location information indicating the locations of first autonomous vehicles.
**Appendix 3:** The traffic control system according to Appendix 1, wherein the vehicle information acquisition unit performs a process to acquire, as the vehicle information, information of cargo carried on first autonomous vehicles in addition to the location information.
**Appendix 4:** The traffic control system according to Appendix 1 or Appendix 2, wherein the vehicle information acquisition unit performs a process to acquire, as the vehicle information, speed information indicating traveling speed of first autonomous vehicles in addition to the location information.
**Appendix 5:** The traffic control system according to Appendix 1, wherein the control unit excludes the regulated ranges from ranges in which second autonomous vehicles other than first autonomous vehicles can travel.
**Appendix 6:** The traffic control system according to Appendix 1, wherein the control unit sends a warning signal to second autonomous vehicles other than first autonomous vehicles to prevent the second autonomous vehicles from entering the regulated ranges.
**Appendix 7:** The traffic control system according to Appendix 1, wherein
   the control unit notifies first autonomous vehicles of the regulated ranges, and
   first autonomous vehicles notify second autonomous vehicles other than first autonomous vehicles of the regulated ranges notified by the control unit.
**Appendix 8:** The traffic control system according to Appendix 7, wherein first autonomous vehicles send a warning signal to second autonomous vehicles other than first autonomous vehicles to prevent the second autonomous vehicles from entering the regulated ranges notified by the control unit.
**Appendix 9:** The traffic control system according to any one of Appendices 1 to 8, wherein the control unit, upon detecting that a first autonomous vehicle is approaching a predetermined distance to a first autonomous vehicle other than the first autonomous vehicle that is ahead of the first autonomous vehicle, prioritizes control over the first autonomous vehicle to follow the first autonomous vehicle that is ahead.
**Appendix 10:** The traffic control system according to Appendix 9, wherein the control unit modifies the predetermined distance according to deterioration of the road.
**Appendix 11:** The traffic control system according to Appendix 10, wherein the control unit detects that the first autonomous vehicle is approaching the predetermined distance to the first autonomous vehicle that is ahead when the regulated ranges for the two first autonomous vehicles overlap each other.
**Appendix 12:** The traffic control system according to any one of Appendices 1 to 11, wherein the control unit causes a first autonomous vehicle to stop at a predetermined point on a road for a predetermined period of time.
**Appendix 13:** The traffic control system according to Appendix 12, further comprising:
   an energy supply unit that supplies energy for traveling to a first autonomous vehicle at a predetermined point.
**Appendix 14:** The traffic control system according to any one of Appendices 1 to 13, wherein the control unit controls the travel of the first autonomous vehicles according to an environment.
**Appendix 15:** The traffic control system according to Appendix 14, further comprising:
   a learned model that has been machine-learned by mapping an operation plan to an environment using historical data;
   wherein the control unit inputs environmental information indicating the environment in which a first autonomous vehicle will be traveling into the learned model and controls the travel of the first autonomous vehicle according to the operation plan output from the learned model.
**Appendix 16:** The traffic control system according to any one of Appendices 1 to 15, wherein a plurality of the first autonomous vehicle are connected to each other.
**Appendix 17:** The traffic control system according to any one of Appendices 1 to 16, wherein autonomous vehicles are vehicles traveling on an expressway.
**Appendix 18:** The traffic control system according to any one of Appendices 1 to 17, wherein the first autonomous vehicles are vehicles for transporting cargo. Traffic control systems.
**Appendix 19:** The traffic control system according to Appendix 18, wherein the first autonomous vehicles transport pre-determined amounts of cargo.
**Appendix 20:** The traffic control system according to Appendix 18 or Appendix 19, wherein the control unit calculates the distribution of cargo to be transferred from a first autonomous vehicle to a third autonomous vehicle to which the cargo is transferred for delivery according to the amount of cargo on the first autonomous vehicle and the maximum loading capacity of the third autonomous vehicle.
**Appendix 21:** The traffic control system according to any one of Appendices 1 to 20, wherein the first autonomous vehicles are EVs or hydrogen powered vehicles.

While the present invention has been described with reference to the embodiments, the present invention is not limited to the above embodiments. Various changes within the scope of the present invention that will be understood by those skilled in the art can be made in the configuration and details of the present invention.

This application claims priority based on JP 2020-197915 filed on November 30, 2020 and incorporates all of its disclosure herein.

## Claims

1. A traffic control method, comprising:
a process for acquiring from autonomous vehicles traveling on roads identification information previously assigned to the autonomous vehicles;
when the acquired identification information includes first identification information, a process for acquiring vehicle information of first autonomous vehicles to which is assigned the identification information that includes the first identification information;
a process for calculating regulated ranges based on acquired vehicle information;
a process for causing first autonomous vehicles to travel according to predetermined operation plans; and
a process for notifying of the calculated regulated ranges.

2. The traffic control method according to claim 1, further comprising:
a process for acquiring, as the vehicle information, location information indicating locations of first autonomous vehicles.

3. The traffic control method according to claim 2, further comprising:
a process for acquiring, as the vehicle information, information of cargo carried on first autonomous vehicles in addition to the location information.

4. The traffic control method according to claim 2 or claim 3, further comprising:
a process for acquiring, as the vehicle information, speed information indicating traveling speeds of first autonomous vehicles in addition to the location information.

5. The traffic control method according to claim 1, further comprising:
a process for excluding regulated ranges from ranges in which second autonomous vehicles other than first autonomous vehicles can travel.

6. The traffic control method according to claim 1, further comprising:
a process for sending a warning signal to second autonomous vehicles other than first autonomous vehicles to prevent the second autonomous vehicles from entering regulated ranges.

7. The traffic control method according to claim 1, further comprising:
a process for notifying first autonomous vehicles of regulated ranges, and
a process for notifying second autonomous vehicles other than first autonomous vehicles of regulated ranges notified by first autonomous vehicles.

8. The traffic control method according to claim 7, further comprising:
a process for sending a warning signal to second autonomous vehicles other than first autonomous vehicles to prevent the second autonomous vehicles from entering the regulated ranges notified from first autonomous vehicles.

9. The traffic control method according to any one of claims 1 to 8, further comprising:
a detection process for detecting whether a first autonomous vehicle is approaching a predetermined distance to another first autonomous vehicle that is ahead; and
a process for, when the first autonomous vehicle is detected to have approached a predetermined distance to the other first autonomous vehicle that is ahead, prioritizing control of the first autonomous vehicle to follow the other first autonomous vehicle that is ahead.

10. The traffic control method according to claim 9, wherein the detection process modifies the predetermined distance according to deterioration of the road.

11. The traffic control method according to claim 9, wherein the detection process detects that the first autonomous vehicle is approaching the predetermined distance to the other first autonomous vehicle that is ahead when the regulated ranges for the two first autonomous vehicles overlap each other.

12. The traffic control method according to any one of claims 1 to 11, further comprising:
a process for stopping a first autonomous vehicle at a predetermined point on the road for a predetermined period of time.

13. The traffic control method according to claim 12, further comprising:
a process for supplying energy for traveling to a first autonomous vehicle at a predetermined point.

14. The traffic control method according to any one of claims 1 to 13, further comprising:
a process for controlling the travel of a first autonomous vehicle according to an environment.

15. The traffic control method according to claim 14, further comprising:
a process for inputting environmental information indicating environments in which first autonomous vehicles will be traveling into a learned model that is machine-learned by mapping operation plans to the environment using historical data; and
a process for controlling travel of first autonomous vehicles according to operation plans output from the learned model.

16. The traffic control method according to any one of claims 1 to 15, wherein a plurality of the first autonomous vehicles are connected to each other.

17. The traffic control method according to any one of claims 1 to 16, wherein the autonomous vehicles are vehicles traveling on an expressway.

18. The traffic control method according to any one of claims 1 to 17, wherein the first autonomous vehicles are vehicles transporting cargo.

19. The traffic control method according to claim 18, wherein the first autonomous vehicles transport a pre-determined amount of cargo.

20. The traffic control method according to claim 18 or claim 19, further comprising:
a process for calculating distribution of cargo to be transferred to third autonomous vehicles to which the cargo is transferred for delivery according to the amount of cargo on the first autonomous vehicles and the maximum loading capacity of the third autonomous vehicles.

21. The traffic control method according to any one of claims 1 to 20, wherein the first autonomous vehicles are EVs or hydrogen-powered vehicles.

22. A traffic control system, comprising:
autonomous vehicles that travel on roads; and
a control device that controls travel of autonomous vehicles, wherein
the control device comprises:
an identification information acquisition unit that acquires from the autonomous vehicles identification information previously assigned to the autonomous vehicles;
a vehicle information acquisition unit that, when identification information acquired by the identification information acquisition unit includes first identification information, acquires vehicle information of a first autonomous vehicle to which is assigned the identification information that includes the first identification information;
a regulated range calculation unit that calculates regulated ranges based on vehicle information acquired by the vehicle information acquisition unit; and
a control unit that causes first autonomous vehicles to travel according to a predetermined operation plan and notifies of the regulated ranges calculated by the regulated range calculation unit.

23. A control device, comprising:
an identification information acquisition unit that acquires, from the automatic vehicles traveling on roads, identification information previously assigned to the autonomous vehicles;
a vehicle information acquisition unit that, when the identification information acquired by the identification information acquisition unit includes first identification information, acquires vehicle information of the first autonomous vehicle to which is assigned the identification information that includes the first identification information;
a regulated range calculation unit that calculates regulated ranges based on the vehicle information acquired by the vehicle information acquisition unit; and
a control unit that causes a first autonomous vehicle to travel according to a predetermined operation plan and that notifies of the regulated ranges calculated by the regulated range calculation unit.

24. A program that causes a computer to execute procedures, the procedures comprising:
a procedure for acquiring, from the autonomous vehicles traveling on roads, identification information previously assigned to the autonomous vehicles;
a procedure for, when the acquired identification information includes first identification information, acquiring the vehicle information of the first autonomous vehicle to which is assigned the identification information that includes the first identification information;
a procedure for calculating regulated ranges based on the acquired vehicle information; and
a procedure for causing a first autonomous vehicle to travel according to a predetermined operation plan and for notifying of the calculated regulated ranges.
